Europäisches Patentamt

European Patent Office

Office européen des brevets

(19)

(11) Veröffentlichungsnummer: **0 027 613**
**B1**

(12) **EUROPÄISCHE PATENTSCHRIFT**

(45) Veröffentlichungstag der Patentschrift:
**29.12.82**

(51) Int. Cl.³: **A 01 N 59/12, C 08 F 8/22**

(21) Anmeldenummer: **80106165.6**

(22) Anmeldetag: **10.10.80**

(54) **Verfahren zur Herstellung von PVP-Iod.**

(30) Priorität: **18.10.79 DE 2942179**

(43) Veröffentlichungstag der Anmeldung:
**29.04.81 Patentblatt 81/17**

(45) Bekanntmachung des Hinweises auf die Patenterteilung:
**29.12.82 Patentblatt 82/52**

(84) Benannte Vertragsstaaten:
**AT BE CH DE FR GB IT LI NL SE**

(56) Entgegenhaltungen:
**EP-A-0 027 582**
**DE-A-2 422 767**
**DE-A-2 814 203**
**DE-B-2 818 767**
**US-A-4 094 967**

(73) Patentinhaber: **BASF Aktiengesellschaft,
Carl-Bosch-Strasse 38, D-6700 Ludwigshafen (DE)**

(72) Erfinder: **Denzinger, Walter, Wormser Landstrasse 65,
D-6720 Speyer (DE)**
Erfinder: **Hartmann, Heinrich, Weinheimer Strasse 46,
D-6703 Limburgerhof (DE)**
Erfinder: **Schwarz, Wolfgang, Benzstrasse 33,
D-6700 Ludwigshafen (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

# 0 027 613

### Verfahren zur Herstellung von PVP-Iod

Die Erfindung betrifft ein Verfahren zur Herstellung von PVP-Iod. PVP-Iod ist das Reaktionsprodukt von Polyvinylpyrrolidon (PVP) mit elementarem Iod, das in steigendem Maße wegen seiner germiciden, bakteriziden, fungiziden und desinfizierenden Eigenschaften verwendet wird.

PVP-Iod kommt im allgemeinen als braunes Pulver in den Handel, das etwa 11% verfügbares Iod, d. h. wirksames Iod, das mit Natrium-Thiosulfat titrierbar ist, und darüber hinaus noch ca. 5,5% Iod in Form des Iodids enthält. Bei einem Iod : Iodid-Verhältnis von 2 : 1 ist im PVP-Iod-Komplex die Iodbildung so stark, daß Iodgeruch nicht mehr wahrnehmbar ist und ein in dem Gasraum über dem PVP-Iod eingebrachtes feuchtes Kaliumdiodidstärkepapier nicht gefärbt wird. In der Praxis dient als Maß für eine befriedigend feste Iodbindung der Verteilungskoeffizient des Iods zwischen einer wäßrigen PVP-Ioslösung und Heptan, der, wie es beispielsweise in der US-PS 30 28 300 beschrieben wird, bei etwa 200 liegt. Ferner gilt die Forderung, daß das PVP-Iod in seinen Zubereitungen, insbesondere in wäßriger Lösung, bei der Lagerung möglichst wenig an verfügbarem Iod verliert, d. h. möglichst stabil ist.

Zur Herstellung eines möglichst stabilen PVP-Iods werden die verschiedensten Verfahrensmaßnahmen beschrieben, beispielsweise wird das pulverförmige PVP-Iod gemäß der DE-PS 10 37 075 einer nachträglichen längeren Temperaturbehandlung bei 90 bis 100°C unterworfen, und in der US-PS 29 00 305 wird beschrieben, daß für die Herstellung eines geeigneten PVP-Iods ein PVP mit einem bestimmten Gehalt an Feuchtigkeit zu verwenden ist. Gemäß der US-PS 28 26 532 wird ein Zusatz von Natriumhydrogencarbonat und der US-PS 30 28 300 wird ein Zusatz von Iodid in Form von Iodwasserstoff oder Alkaliiodid beschrieben. Die US-PS 38 98 326 lehrt den Zusatz von Iodwasserstoff oder Alkaliiodiden zur wäßrigen PVP-Lösung und die Umsetzung des aus der Lösung nach Trocknung erhaltenen pulverförmigen PVP-Iodidgemisches mit Iod. In der DE-AS 24 39 197 wird beschrieben, daß in einem wasserfreien organischen Lösungsmittel polymerisiertes Polyvinylpyrrolidon zur Herstellung eines stabilen PVP-Iods besonders geeignet ist.

Die genannten Verfahren des Standes der Technik haben auch das Ziel, ein stabiles PVP-Iod wirtschaftlich herzustellen. Sie weisen jedoch auch beachtliche Nachteile auf. Gemäß der in der DE-PS 10 37 075 beschriebenen Verfahrensweise sind zur Bildung des PVP-Iod-Komplexes Temperzeiten bei Temperaturen von 90 bis 100°C von 18 bis 64 Stunden erforderlich, um ein beständiges Produkt mit einem Iod : Iodid-Verhältnis von 2 : 1 zu erhalten. Auch bei dem in der US-PS 29 00 305 beschriebenen Verfahren muß in der Regel 22 Stunden lang getempert werden. Die Temperung nach diesem Verfahren wird zusätzlich dadurch erschwert, daß durch den geforderten höheren Wassergehalt von 4 bis 15% des verwendeten Polyvinylpyrrolidons, wenn ein Verbacken der Mischung aus Polyvinylpyrrolidon und Iod vermieden werden soll, in der Praxis bei Temperaturen von unter 90°C getempert werden muß und dadurch gegenüber normalen pulverförmigen Polyvinylpyrrolidon, das üblicherweise einen Wassergehalt bis zu 5 Gew.-% aufweist, noch längere Temperzeiten erforderlich werden.

Gemäß der Verfahrensweise der US-PS 30 28 300 wird das Tempern eingespart durch Zugabe von Iodid in Form von Alkaliiodid oder Iodwasserstoffsäure zur Mischung von Polyvinylpyrrolidon und Iod. Auch dieses Verfahren ist nicht optimal, da i, homogene Mischungen entstehen, die nur eine schwache Iodbindung besitzen und daher stark nach Iod riechen. Die US-PS 38 93 326 lehrt daher den Zusatz von Iodiden zu einer wäßrigen Polyvinylpyrrolidon-Lösung, die anschließend getrocknet wird, und danach wird das pulverförmige Polyvinylpyrrolidon-Iodid-Gemisch ohne Temperung mit Iod umgesetzt. Wird dem Polyvinylpyrrolidon gemäß US-PS 38 98 326 das Iodid als Iodwasserstoffsäure zugesetzt, entstehen bei der Trocknung beachtliche Korrosionsprobleme, wird dagegen das Iodid als Alkaliiodid zugesetzt, entspricht das PVP-Iod, bedingt durch den Alkaligehalt, nicht mehr den strengen Anforderungen der Arzneimittelgesetze.

Auch gemäß der DE-AS 24 39 197 werden in der Regel 10stündige Temperzeiten beschrieben, wobei jedoch, um Verteilungskoeffizienten von etwa 200 zu erhalten, mindestens 20stündige Temperzeiten erforderlich sind.

Die Temperzeiten lassen sich stark reduzieren, wenn man gemäß DE-AS 28 18 767 PVP mit elementarem Iod in Gegenwart von Ameisensäure, Oxalsäure oder eines Ammoniumsalzes oder Amids der Kohlen-, Ameisen- oder Oxalsäure umsetzt. Stellt man aus dem so erhaltenen PVP-Iod wäßrige Lösungen her, so sind diese zwar relativ stabil, sie verlieren aber im Laufe der Zeit Iod, wodurch deren Lagerzeit beträchtlich eingeschränkt wird.

Aus der DE-PS 902 170 ist bekannt, daß man eine Lugol'sche Lösung mit PVP kombinieren kann. Lugol'sche Lösung ist bekanntlich eine wäßrige Lösung, die Iod und Kaliumiodid im Verhältnis 1 : 2 enthält. Derartige Lösungen haben jedoch den Nachteil, daß, wenn man von einem handelsüblichen PVP (üblicherweise hergestellt gemäß der DE-PS 922 378 durch Polymerisation von Vinylpyrrolidon in wäßriger Lösung in Gegenwart von Wasserstoffperoxid) ausgeht, der Gehalt an wirksamen Iod bei der Lagerung der Lösungen schnell abfällt. Nach der Lehre der DE-OS 25 40 170 wird dieser Nachteil vermieden, wenn ein PVP Verwendung findet, das durch Polymerisation in organischen Lösungsmitteln mit organischen Initiatoren und gegebenenfalls anschließender Wasserdampfbe-

2

handlung erhalten wird. Die wäßrige PVP-Iod-Lösung wird dann durch Auflösen einer Iod-Ionen liefernden Verbindung, vorzugsweise Natriumiodid oder Kaliumiodid, in der wäßrigen PVP-Lösung erhalten.

Dieses zuletzt genannte Verfahren liefert zwar bei Verwendung von Alkali-Iodiden als Iod-Ionen liefernde Verbindung eine Iod-stabile PVP-Lösung, jedoch entsprechen solche Iodophore, wegen ihres Aschegehalts, nicht den Vorschriften der U.S. Pharmacopeia XIX. Sie dürfen daher nicht für pharmazeutische Präparate verwendet werden. Nimmt man als Iod-Ionen spendende Verbindung Iodwasserstoffsäure, so entsprechen die Iodophore zwar den Bedingungen der US Pharmacopeia, aber sie sind nicht stabil bei Lagerung. Zusätzlich ist die Handhabung von Iodwasserstoffsäure wegen seiner enormen Korrosionswirkung äußerst schwierig.

Gemäß der DE-OS 2 814 203 erhält man PVP-Iod durch Umsetzen einer PVP-Suspension mit Iod. Diese Arbeitsweise ist relativ kompliziert, weil ein oberflächenaktives Mittel zugesetzt und das organische Lösungsmittel nach der Reaktion entfernt werden muß. Außerdem erhält man Produkte, die einen hohen Iodverlust besitzen.

Der Erfindung liegt die Aufgabe zugrunde, stabilere wäßrige PVP-Iod-Lösungen herzustellen.

Die Erfindung betrifft ein Verfahren zur Herstellung von PVP-Iod mit einem Iod-Iodid-Verhältnis von etwa 2 : 1 und einem Verteilungskoeffizienten von 180−250 durch Umsetzung von PVP mit elementarem Iod in Gegenwart von Ameisensäure, Oxalsäure oder eines Ammmoniumsalzes oder Amids der Kohlen-, Ameisen- oder Oxalsäure, welches dadurch gekennzeichnet ist, daß man die Umsetzung in wäßriger Lösung durchführt.

Als die Iodidbildung beschleunigende Verbindung kommen neben den genannten Säuren z. B. Ammoniumcarbonat, Ammoniumhydrogencarbonat, Ammoniumcarbaminat, Harnstoff, Ammoniumformiat, Formamid, Ammoniumoxalat, Oxamidsäure oder Oxamid in Betracht.

Besonders bevorzugt sind Oxalsäure und Ameisensäure, die bei der Reaktion mit Iod neben Iodwasserstoff nur noch Kohlendioxid ergeben sowie ihre Amide und Ammoniumsalze.

Die Menge an die Iodidbildung beschleunigenden Zusatz wird in der Regel so bemessen, daß bei vollständiger Umsetzung ein Fünftel bis ein Drittel des der wäßrigen Polyvinylpyrrolidonlösung zugemischten Iods zu Iodid umgesetzt wird. Sie liegt, berechnet auf das eingesetzte Iod, je nach Art des Zusatzes zwischen 2 und 30 Gew.-%, bevorzugt 4 und 22 Gew.-%.

Der iodidbildende Zusatz wird beim Mischen der Polyvinylpyrrolidonlösung mit dem Iod in üblichen Rührreaktoren zweckmäßigerweise direkt beigemischt. Eine bevorzugte Ausführungsform ist das Einmischen des iodidbildenden Zusatzes direkt in die Polyvinylpyrrolidonlösung, und dann erst folgt die Zugabe des Iods.

Zweckmäßigerweise erfolgt das Mischen des Polyvinylpyrrolidons mit dem erfindungsgemäßen Zusatz und Iod zunächst bei Raumtemperaturen oder leicht erhöhten Temperaturen bis etwa 50° C, bis das elementare Iod in der Polyvinylpyrrolidon-Lösung gelöst ist. Die Temperung zur Iodidbildung erfolgt dann bei 50 bis 80° C, wobei der für stabiles PVP-Iod charakteristische Verteilungskoeffizient von etwa 200 und ein Iod : Iodid-Verhältnis von 2 : 1 im allgemeinen nach 0,5 bis 30 Stunden erreicht wird und das erhaltene PVP-Iod einen verfügbaren Iodgehalt von 5 bis 20 Gew.-% (berechnet auf Trockensubstanz) aufweist.

Das verwendete Polyvinylpyrrolidon hat üblicherweise einen K-Wert von 8 bis 50, wobei ein Bereich von 10 bis 35 bevorzugt ist. Das erfindungsgemäße Verfahren eignet sich in ganz besonderer Weise für ein Polyvinylpyrrolidon von einem K-Wert von 10 bis 20.

Ein für das erfindungsgemäße Verfahren besonders geeignetes Polyvinylpyrrolidon wird durch Polymerisation in einem organischen Lösungsmittel, wie Isopropanol oder Toluol, unter Verwendung von organischen Perverbindungen als Radikalbildner, wie z. B. Dialkylperoxiden, hergestellt und gegebenenfalls anschließend einer Wasserdampfdestillation unterworfen, wie es beispielsweise in der DE-OS 25 15 127 beschrieben wird.

Hervorragend geeignet zur Herstellung der stabilen PVP-Iodlösungen sind auch Polyvinylpyrrolidone, die nach der Polymerisation einem Hydrierungsprozeß unterzogen werden. Dabei erfolgt die Hydrierung des Polyvinylpyrrolidons nach den üblichen, bekannten Verfahren. So kann die Hydrierung mit Wasserstoff in Gegenwart geeigneter Katalysatoren oder durch Behandlung mit komplexen Hydriden erfolgen. Zweckmäßigerweise erfolgt die Hydrierung mit Wasserstoff in wäßriger Lösung bei einer Temperatur von 20 bis 100° C, bevorzugt 50 bis 80° C, und einem Druck von 50 bis 500 bar, bevorzugt 200 bis 300 bar, innerhalb 1 bis 24 Stunden, vgl. US-PS 2 914 516. Als Katalysatoren sind die üblichen Platin- und Palladiumkatalysatoren sowie insbesondere Raney-Nickel geeignet.

Eine besonders bevorzugte Ausführungsform der Hydrierung ist die Behandlung des Polyvinylpyrrolidons mit komplexen Hydriden, wobei — bezogen auf das Gewicht der Polymerisate — 0,1 bis 10, vorzugsweise 0,5 bis 5% zur Anwendung gelangen. Als Hydride verwendet man vor allem solche, die wie Natrium- und Lithiumboranat wasserlöslich sind, doch läßt sich die Reaktion auch mit anderen wie $NaBH(OCH_3)_3$, $NaAlH_4$, $LiAlH_4$, $NaAlH_2(OCH_2OCH_3)_2$ oder $LiAlH[OC(CH_3)_3]_3$ durchführen. Die Lactamgruppe des Polyvinylpyrrolidons wird dabei nicht angegriffen.

Die Reaktion mit den komplexen Hydriden wird, wenn möglich, in Wasser durchgeführt, was mit Lithium und Natriumboranat realisierbar ist. Für die anderen Hydride verwendet man zweckmäßigerweise Lösungsmittel wie niedere Alkohole, z. B. Methanol, Ethanol, Iso- und n-Propanol, n-Butanol-

3

0 027 613

oder tert.Butanol, Ether, wie Dioxan oder Tetrahydrofuran, oder Aromaten wie Benzol, Toluol oder Xylol. Die Reaktion wird bei Temperaturen von 1 bis 150, vorzugsweise 15 bis 80°C durchgeführt. Sie richtet sich nach dem Siedepunkt der Lösungsmittel. Wenn man in wäßrigen oder alkoholischen Lösungsmitteln arbeitet, stellt man im allgemeinen pH-Werte von ca. 7 vor der Reaktion ein. Die Dauer der Reaktion schwankt zwischen 0,5 und 24, vorzugsweise 2 bis 8 Stunden. Falls das Polyvinylpyrrolidon Carboxylgruppen enthält, kann es vorteilhaft sein, die Carboxylgruppen vor der Umsetzung mit Hydriden nach den üblichen Methoden zu verestern.

Um eventuell im Polymerisat vorhandene Verunreinigungen zu entfernen, hat es sich als sehr nützlich erwiesen, nach der Umsetzung mit komplexen Hydriden die Polymerisatlösung über Ionenaustauscher zu reinigen. Geeignet sind z. B. Ionenaustauscher auf Polystyrolbasis mit Sulfo-, Carboxyl- oder quarternären Ammoniumgruppen oder auf Basis von sauren oder basischen Silikaten.

Bei der Herstellung der wäßrigen PVP-Iod-Lösung wird zweckmäßig von 10 bis 60gew.-%igen wäßrigen PVP-Lösungen ausgegangen, wobei die Polymerisaten mit kleinem K-Wert die höheren Konzentrationen gelten und umgekehrt.

Die erfindungsgemäß hergestellten PVP-Iod-Lösungen können direkt auf die übliche Art unter Zugabe von weiteren Hilfsstoffen, wie Tensiden zu für den Verbraucher bestimmten Endprodukten formuliert werden. Diese Lösungen haben im allgemeinen eine Gesamtkonzentration 10 bis 50 Gew.-% an Feststoffen.

Die neuen PVP-Iod-Lösungen besitzen überraschenderweise eine um etwa 50% höhere Stabilität als Lösungen, die man durch Auflösen von PVP-Iod erhält, welches gemäß der DE-AS 28 18 767 hergestellt ist.

Weiter ist es gegenüber dem Verfahren der DE-AS 28 13 767 ein großer Vorteil, daß das PVP direkt als Lösung eingesetzt werden kann und nicht aus der wäßrigen Lösung isoliert werden muß.

Gegebenenfalls kann aus den wäßrigen PVP-Iod-Lösungen auch ein Festprodukt durch einen Trockenprozeß, beispielsweise der Walzentrocknung, Sprühtrocknung oder der Sprühgranulierung, isoliert werden.

Die folgenden Beispiele erläutern die Erfindung. Angegebene Teile sind Gewichtsteile. Die K-Werte werden nach H- Fikentscher, Cellulose-Chemie, 13, 38−64 und 71−74 (1932) in wäßrigen Lösungen bestimmt. Die Bestimmung des Iodverlustes erfolgt durch 15stündige Lagerung einer wäßrigen PVP-Iodlösung mit einem Gehalt an verfügbarem Iod von 1% bei 80°C. Die höhere Temperatur von 80°C hat den Vorteil, daß die umständlichere 14tägige Lagerung bei 52°C umgangen werden kann und vergleichbare Werte erhalten werden. Der Verteilungskoeffizient (VK) wird bestimmt gemäß US-PS 3 028 300 durch einminütiges intensives Schütteln von 1,0 ml einer wäßrigen PVP-Iodlösung mit einem verfügbaren Iodgehalt von 1,0%, mit 25 ml Heptan in einem verschlossenen Glaskolben in einem thermostatisierten Heizbad von 25,0°C. Nach einigen Minuten Stehen werden die beiden Phasen abgetrennt und der Iodgehalt der wäßrigen Phase durch Titration mit Natriumthiosulfat und der Iodgehalt der Heptanphase spektralphotometrisch bestimmt. Die Berechnung gemäß folgender Gleichung:

$$VK = \frac{\text{mg Iod in } H_2O\text{-Phase}}{\text{mg Iod in Heptan}} \times \frac{\text{ml Heptan (25)}}{\text{ml } H_2O\text{-Phase (1)}} .$$

Die in den Beispielen 3 und 4 verwendeten Polyvinylpyrrolidon-Lösungen wurden nach folgenden Vorschriften hergestellt.

A. In einem Druckrührautoklaven werden 300 Teile einer Mischung aus 300 Teilen Vinylpyrrolidon, 700 Teilen Isopropanol und 12 Teilen Ditertiärbutylperoxid vorgelegt und auf 145°C erhitzt, wobei sich in der Apparatur ein Überdruck von ca. 7,5 bar einstellt. Dann wird die restliche Mischung innerhalb 3 Stunden gleichmäßig zudosiert. Anschließend wird 1 Stunde nacherhitzt, bis der Restgehalt an monomerem Vinylpyrrolidon unter 0,5% beträgt. Durch Entspannen wird nun auf 80°C abgekühlt und dabei ca. 570 Teile Isopropanol abdestilliert. Nun wird mit 100 Teilen Wasser verdünnt und durch Einleiten von Wasserdampf das Isopropanol restlos abdestilliert. Nach Erreichen einer Dampfübergangstemperatur von 98°C wird noch mit 90 Teilen Wasserdampf ausgeblasen. Anschließend wird der Festgehalt der Lösung mit Wasser auf 50% eingestellt. Der K-Wert des PVP beträgt 12,5.

B. 750 Teile Vinylpyrrolidon werden in 250 Teilen Wasser gelöst, mit 0,5 Teilen 0,01%iger Kupfer-II-chloridlösung und mit 30 Teilen 30%igem Wasserperoxid versetzt und 6 Stunden bei 70°C bei einem pH-Wert von 7,6 polymerisiert. Das erhaltene Polymerisat weist einen K-Wert von 17 auf. Nach dem Abkühlen wird die Lösung auf 40%ig verdünnt, mit 15 Teilen Natriumboranat versetzt und 12 Stunden gerührt. Anschließend erfolgt die Reinigung durch hintereinanderfolgende Behandlung mit 10 l Kationenaustauscher (®Lewatit S 100) und 10 l Anionenaustauscher (®Lewatit M 500). Der Feststoffgehalt der Lösung beträgt 40%.

4

**0 027 613**

## Beispiel 1

In einem Rührreaktor werden 273 Teile einer Lösung von Polyvinylpyrrolidon hergestellt nach Beispiel I der DE-AS 28 18 767, mit 1,05 Teilen Ameisensäure versetzt und die Mischung mit wäßriger Ammoniaklösung auf 7,0 eingestellt. Anschließend werden 18 Teile gemahlenes Iod eingetragen, ca. 2 Stunden gerührt bis kein Schäumen, bedingt durch Kohlendioxidentwicklung, mehr erkennbar ist und dann 20 Std. bei 70°C getempert.

Die homogene PVP-Iodlösung besitzt folgende Kenndaten:

| | |
|---|---|
| Verfügbarer Iodgehalt: | 4,1% |
| Verteilungskoeffizient: | 207 |
| Iodverlust: | 2,8% |

## Beispiel 2

Analog Beispiel 1 wurden 207 Teile Polyvinylpyrrolidon hergestellt nach Beispiel II der DE-AS 28 18 767 mit 0,8 Teilen Ameisensäure versetzt, der pH-Wert mit wäßriger Ammoniaklösung auf 8,0 eingestellt und 17 Teile Iod eingetragen. Nach 2 Std. Mischen bei Raumtemperatur wird noch 5 Stunden bei 80°C getempert.

Die homogene PVP-Iodlösung besitzt folgende Kenndaten:

| | |
|---|---|
| Verfügbarer Iodgehalt: | 5,1% |
| Verteilungskoeffizient: | 202 |
| Iodverlust: | 8% |

## Beispiel 3

Analog der Arbeitsweise nach Beispiel 1 werden 166 Teile Polyvinylpyrrolidonlösung, hergestellt nach A, mit 0,75 Teilen Ameisensäure versetzt und dann 17 Teile Iod eindosiert. Nach 2 Stunden Mischen bei Raumtemperatur wird noch 12 Stunden bei 75°C getempert.

Die homogene PVP-Iodlösung besitzt folgende Kenndaten:

| | |
|---|---|
| Verfügbarer Iodgehalt: | 6,2% |
| Verteilungskoeffizient: | 194 |
| Iodverlust: | 14% |

## Beispiel 4

Analog Beispiel 1 wurden 207 Teile Polyvinylpyrrolidonlösung, hergestellt nach B, mit 1,35 Teilen wasserfreier Oxalsäure versetzt, die Mischung mit wäßriger Ammoniaklösung auf einen pH-Wert von 8,5 gestellt und anschließend 17 Teile Iod eingetragen. Nach 2 Stunden Mischen bei Raumtemperatur wird noch 30 Std. bei 65°C getempert.

Die homogene PVD-Iodlösung besitzt folgende Kenndaten:

| | |
|---|---|
| Verfügbarer Iodgehalt: | 5,0% |
| Verteilungskoeffizient: | 220 |
| Iodverlust: | 9% |

## Beispiel 5

Analog Beispiel 1 werden die in nachfolgender Tabelle angegebenen Mengen an Polyvinylpyrrolidon, hergestellt gemäß Beispiel II der DE-AS 28 18 767, die Iodionenbildung beschleunigter Verbindung und Iod gemischt, 2 Std. bei Raumtemperatur gerührt und 5 Std. bei 80°C getempert. Die Daten sind nachfolgender Tabelle zu entnehmen:

5

| Ansatz | Polyvinyl-pyrrolidon-Lösung | Iodionenbildung beschleunigende Verbindung | Iod | Verfügb. Iodgehalt | VK | Iod-ver-lust |
|---|---|---|---|---|---|---|
| | [Teile] | [Teile] | [Teile] | [%] | | |
| a | 200 | 1,0 Formamid | 20 | 6,2 | 220 | 7,6% |
| b | 225 | 1,3 Ammoniumcarbaminat | 10 | 3,0 | 198 | 7,5% |
| c | 190 | 3,5 Ammoniumhydrogencarbonat | 24 | 7,8 | 212 | 6,9% |

**Patentansprüche**

1. Verfahren zur Herstellung von PVP-Iod mit einem Iod-Iodid-Verhältnis von etwa 2 : 1 und einen Verteilungskoeffizienten von 180 – 250 durch Umsetzen von PVP mit elementarem Iod in Gegenwart von Ameisensäure, Oxalsäure oder eines Ammoniumsalzes oder Amids der Kohlen-, Ameisen- oder Oxalsäure, dadurch gekennzeichnet, daß man die Umsetzung in wäßriger Lösung durchführt.

2. Verfahren gemäß Anspruch 1, dadurch gekennzeichnet, daß man von einem PVP ausgeht, welches einen K-Wert von 10 bis 35 besitzt.

3. Verfahren gemäß Anspruch 1, dadurch gekennzeichnet, daß man von einem PVP ausgeht, welches durch Polymerisation von Vinylpyrrolidon in einem organischen Lösungsmittel unter Verwendung von organischen Perverbindungen als Radikalbildner hergestellt und ggf. anschließend einer Wasserdampfdestillation unterworfen worden ist.

**Claims**

1. A process for the preparation of PVP-iodine, having an iodine : iodine ratio of about 2 : 1 and a partition coefficient of 180 – 250, by reacting PVP with elementary iodine in the presence of formic acid, oxalic acid or an ammonium salt or amide of carbonic acid, formic acid or oxalic acid, wherein the reaction is carried out in aqueous solution.

2. A process as claimed in Claim 1, wherein the PVP starting material has a K value of from 10 to 35.

3. A process as claimed in Claim 1, wherein the PVP starting material has been prepared by polymerization of vinylpyrrolidone in an organic solvent, using an organic per-compound as a source of free radicals, and may or may not subsequently have been subjected to a steam destillation.

**Revendications**

1. Procédé de préparation de PVP-iode à rapport iode-iodure d'environ 2/1 et à coefficient de dispersion de 180 à 250, par réaction de PVP avec de l'iode élémentaire, en présence d'acide formique, d'acide oxalique ou d'un sel d'ammonium ou d'amide des acides carbonique, formique ou oxalique, caractérisé par le fait qu'on effectue la réaction en solution aqueuse.

2. Procédé selon la revendication 1, caractérisé par le fait qu'on part d'un PVP qui possède un indice K de 10 à 35.

3. Procédé selon la revendication 1, caractérisé par le fait qu'on part d'un PVP qui est préparé par polymérisation de vinylpyrrolidone dans un solvant organique en utilisant des percomposés organiques comme formateur de radicaux et qui, éventuellement ensuite, est soumis à une distillation à la vapeur d'eau.